# FASCICULE DE BREVET EUROPEEN

(11) **EP 2 296 950 B1**
(45) Date de publication et mention de la délivrance du brevet: **23.05.2018**
(21) Numéro de dépôt: 09784401.3
(22) Date de dépôt: 12.06.2009
(51) Int. Cl.: B60T 13/74, B60T 17/22, B60T 7/12, G06F 12/00

(54) **PROCEDE ET DISPOSITIF DE DIAGNOSTIC D'UN SYSTEME DE CONTROLE D'UN VEHICULE AUTOMOBILE**
DIAGNOSEVERFAHREN UND -GERÄT FÜR EIN FAHRZEUGSTEUERUNGSSYSTEM
DIAGNOSTIC METHOD AND APPARATUS FOR A VEHICLE CONTROL SYSTEM

(30) Priorité: 24.06.2008 FR 0854181
(43) Date de publication de la demande: 23.03.2011
(73) Titulaire: Renault s.a.s., 92100 Boulogne-Billancourt (FR)
(72) Inventeur: MONTI, Alessandro, F-92250 La Garenne-Colombes (FR); LOSQ, Arnaud, F-78180 Montigny-le-Bretonneux (FR); MOUNIER, Eric, F-27750 La Couture Boussey (FR)
(86) Numéro de dépôt international: PCT/FR2009/051105
(87) Numéro de publication internationale: WO 2010/007270

(56) Documents cités:
- DE-A1- 4 340 027
- US-A- 5 646 849

## Description

L'invention concerne un procédé et un dispositif de diagnostic d'un système de contrôle d'un véhicule automobile.

Plus particulièrement, l'invention concerne un système de frein de stationnement assisté.

Actuellement certains véhicules automobiles sont équipés d'un système de frein de stationnement assisté qui consiste à gérer de manière automatique un frein de stationnement selon la situation du véhicule automobile. Un tel système permet de gérer de manière automatique les situations suivantes ;
- l'assistance au démarrage, dont le principe est de relâcher les freins sur les roues non motrices dès lors que le couple transmis par le moteur est suffisant pour compenser l'effet de la pente ;
- le serrage automatique, dont le principe est de serrer automatiquement le frein de stationnement lorsqu'une demande volontaire d'arrêt du moteur est faite par le conducteur ;
- le freinage dynamique, dont le principe est de freiner le véhicule sans bloquer les roues en respectant une décélération donnée avec le seul frein de stationnement.

Une gestion assistée du frein de stationnement est complexe et doit prendre en compte toutes les situations d'utilisation, et particulièrement les mauvaises utilisations du système par le conducteur. Par exemple, lorsque le conducteur ouvre la portière du véhicule alors que le moteur est en marche et que le frein de stationnement n'a pas été serré manuellement, le système déclenche dans ce cas une alerte car le véhicule n'est pas immobilisé. Par ailleurs, dans la situation où le moteur cale, que le frein de stationnement n'est pas serré et que le conducteur ouvre la portière, un signal d'alerte est généré pour indiquer au conducteur que le frein de stationnement est non serré.

Dans certaines situations, le système de frein de stationnement assisté peut ne pas être correctement utilisé par le conducteur, par exemple lorsque le conducteur ignore les signaux d'alerte, ce qui peut conduire à des situations dangereuses. Il existe donc un besoin de diagnostiquer les situations critiques pour en déterminer les causes et dans le but de pouvoir affirmer ou infirmer une mauvaise utilisation du système par le conducteur.

En outre, en cas d'accident il est difficile de connaître le temps qui s'est écoulé entre la génération d'un signal d'alerte et la demande de serrage du frein de stationnement effectuée par le conducteur. En effet, actuellement la plupart des véhicules automobiles ne sont pas munis de moyens pour dater les informations qui circulent dans les unités de commande électronique.

On peut citer par exemple la demande de brevet britannique GB 2 376 990 qui décrit un système de contrôle d'un frein de stationnement dans lequel on relâche le frein de stationnement lorsque le véhicule est animé d'un déplacement positif et que la pédale d'embrayage atteint une position satisfaisante, mais ce document ne décrit pas une méthode de diagnostique d'un système de frein de stationnement assisté.

On peut citer également la demande de brevet britannique GB 2 342 967 qui divulgue un dispositif de contrôle d'un frein de stationnement dans lequel on relâche ledit frein lorsque le couple de frein appliqué aux roues est inférieure à un certain seuil. Par ailleurs, on peut citer la demande de brevet français FR 2 828 450 déposée au nom de la demanderesse qui décrit un dispositif d'assistance au démarrage en côte et la demande de brevet français FR 2 841 199, déposée également au nom de la demanderesse, qui divulgue un dispositif de desserrage automatique du frein de stationnement au démarrage. Mais ces documents ne divulguent pas non plus un moyen de diagnostiquer le fonctionnement d'un système de frein de stationnement assisté.

Il est également connu, par le document US 5,646,849, une méthode de contrôle du freinage d'un véhicule automobile dans laquelle on enregistre une table de commande de freinage dans une mémoire de type EEPROM. Toutefois, les valeurs de la table enregistrée dans l'EEPROM sont remplacées régulièrement. Ainsi, il n'est pas possible d'effectuer un diagnostic, notamment a posteriori, du fonctionnement du dispositif de frein de stationnement assisté.

Un des buts de l'invention est donc de fournir un dispositif et un procédé pour diagnostiquer le fonctionnement d'un système de contrôle général d'un véhicule automobile à la suite d'un signal d'alerte émis par ledit système, mais également lorsqu'il n'y a aucune remontée de défaut.

Le dispositif et le procédé proposés seront particulièrement adaptés pour diagnostiquer un système de frein de stationnement assisté d'un véhicule automobile.

Un autre but de l'invention est de fournir un moyen simple et peu coûteux pour établir le temps passé entre la génération d'un signal d'alerte et la réaction du conducteur.

Dans un mode de réalisation, un dispositif d'enregistrement des données émises depuis un système de contrôle d'un véhicule automobile, comprenant une mémoire volatile, une mémoire non volatile et un module d'enregistrement des données, apte à recevoir un signal d'état d'activation émis par le système de contrôle et qui est apte à enregistrer les données dans une première zone de la mémoire volatile sur un front montant du signal d'état d'activation et dans une deuxième zone de la mémoire volatile sur un front descendant du signal d'état d'activation.

Le dispositif comprend en outre un module de gestion des enregistrements apte à recevoir le signal d'état d'activation et qui est apte à activer une commande d'enregistrement sur un front descendant du signal d'état d'activation. Le module d'enregistrement est de plus apte à recevoir la commande d'enregistrement et apte à enregistrer le contenu des deux zones de la mémoire volatile dans une zone de la mémoire non volatile lorsque la commande d'enregistrement est activée.

Un tel dispositif comprend une mémoire de type volatile et une mémoire de type non volatile. La mémoire de type volatile comprend deux zones pour enregistrer des données. Par ailleurs, la mémoire de type non volatile peut comprendre une pluralité de zones de mémoire afin de conserver chaque enregistrement dans une zone distincte. En effet, on entend par « enregistrer des données dans une zone de la mémoire non volatile » un enregistrement des données dans une zone, de la mémoire non volatile, qui est différente à chaque nouvel enregistrement. Il y aura donc autant de zones utilisées de la mémoire non volatile que d'événements déclenchant un enregistrement de données.

La mémoire de type non volatile peut être par exemple une mémoire de type EEPROM ou « Electrically Erasable Programmable Read Only Memory » en langue anglaise, ou encore « Mémoire Morte Effaçable Electriquement et Programmable ».

Grâce à l'enregistrement des données d'un système de contrôle dans deux zones distinctes de la mémoire volatile avant et après l'activation du système on peut fournir un moyen pour diagnostiquer le fonctionnement du système lorsqu'il n'y a pas de remontée de défaut. En effet, en comparant les deux états distincts des données on peut suivre l'évolution du système. En sauvegardant le contenu des deux zones de la mémoire volatile dans une zone de la mémoire de type non volatile on peut différer l'analyse des données.

Selon un autre mode de réalisation, le module d'enregistrement des données et le module de gestion des enregistrements sont aptes à recevoir un signal d'alerte émis par le système de contrôle. Le module d'enregistrement des données est apte à enregistrer les données dans la première zone de la mémoire volatile sur un front montant du signal d'alerte. Le module de gestion des enregistrements est apte à activer la commande d'enregistrement sur un front montant du signal d'alerte.

Dans la situation où un signal d'alerte est généré, on sauvegarde les données dans une première zone de la mémoire volatile, puis on sauvegarde le contenu de cette zone de la mémoire volatile dans une zone de la mémoire non volatile. Ainsi on peut conserver le contexte de déclenchement du signal d'alerte.

Selon encore un autre mode de réalisation, le dispositif comprend un module de gestion d'un compteur apte à incrémenter un compteur sur un front montant du signal d'alerte et qui est apte à transmettre la valeur courante du compteur au module d'enregistrement des données. Le module d'enregistrement est apte à enregistrer la valeur courante du compteur dans une zone de la mémoire volatile.

A l'aide de l'incrémentation d'un compteur, on fournit un moyen simple de dater les enregistrements sans avoir à utiliser, par exemple, un protocole de datation des données qui est plus complexe et plus coûteux à réaliser.

Selon un autre mode de réalisation, le dispositif comprend un module d'enregistrement du compteur apte à enregistrer la valeur courante du compteur dans une zone de la mémoire non volatile sur un front montant d'une commande de mise en veille émise par le système de contrôle, et qui est apte à transmettre la valeur enregistrée du compteur au module de gestion du compteur sur un front montant d'une commande de reprise par le système de contrôle.

Dans certaines situations, on peut être amené à attendre un certain temps entre la génération d'un signal d'alerte et la réaction du conducteur. Par exemple lorsque le conducteur arrête le moteur, qu'il quitte son véhicule et que le frein de stationnement n'est pas serré. Ainsi, pour éviter une consommation électrique trop importante, on peut demander une mise en veille dudit dispositif sans perdre la valeur du compteur.

Selon encore un autre mode de réalisation, le module de gestion des enregistrements est apte comparer la valeur courante du compteur avec un seuil de compteur maximum, et qui est apte à activer la commande d'enregistrement et à activer une commande d'enregistrement du compteur saturé si le compteur est strictement supérieur au seuil de compteur maximum, le module d'enregistrement des données étant apte à recevoir la commande d'enregistrement du compteur saturé et qui est apte à enregistrer la valeur courante du compteur et les données dans la première zone de la mémoire volatile lorsque la commande d'enregistrement du compteur saturé est activée.

Pour économiser de la place mémoire, on peut utiliser un compteur qui possède une taille maximum. Le dispositif permet donc de gérer cette contrainte de taille sur le compteur en étant équipé d'un moyen qui gère le compteur lorsque celui-ci atteint cette taille maximum, c'est-à-dire quand le compteur est saturé.

Selon un autre aspect, il est proposé un procédé d'enregistrement des données émises depuis un système de contrôle d'un véhicule automobile, comprenant une mémoire volatile et une mémoire non volatile, générant au moins un signal d'état d'activation. Selon ce procédé on enregistre les données dans une première zone de la mémoire volatile lorsque le signal d'état d'activation est activé et dans une deuxième zone de la mémoire volatile lorsque le signal d'état d'activation est désactivé.

On enregistre ensuite le contenu des deux zones de la mémoire volatile dans une zone de la mémoire non volatile lorsque le signal d'état d'activation est désactivé.

Selon un autre mode de mise en oeuvre, dans lequel le système de contrôle génère au moins un signal d'alerte, on enregistre les données dans la première zone de la mémoire volatile lorsque le signal d'alerte est activé, puis on enregistre le contenu des deux zones de la mémoire volatile dans une zone de la mémoire non volatile.

Selon encore un autre mode de mise en oeuvre, on incrémente un compteur lorsque le signal d'alerte est activé, et l'on enregistre les données et le compteur dans la première zone de la mémoire volatile lorsque le signal d'état d'activation est activé.

Selon un autre mode de mise en oeuvre, dans lequel le système de contrôle génère une commande de mise en veille et une commande de reprise, on enregistre la valeur courante du compteur dans une zone de la mémoire non volatile lorsque la commande de mise en veille est activée, et l'on initialise le compteur par la valeur courante enregistrée du compteur lorsque la commande de reprise est activée.

Selon encore un autre mode de mise en oeuvre, on compare la valeur courante du compteur avec un seuil de compteur maximum, et lorsque le compteur est strictement supérieur au seuil de compteur maximum, on enregistre les données et le compteur dans la première zone de la mémoire volatile, puis on enregistre le contenu des deux zones de la mémoire volatile dans une zone de la mémoire non volatile.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue schématique d'un dispositif d'enregistrement des données émises depuis un système de contrôle d'un véhicule automobile ;
- la figure 2 est une vue schématique d'un mode de réalisation d'un module d'enregistrement des données ; et
- les figures 3a, 3b illustrent les principales phases d'un procédé d'enregistrement des données émises depuis un système de contrôle d'un véhicule automobile.

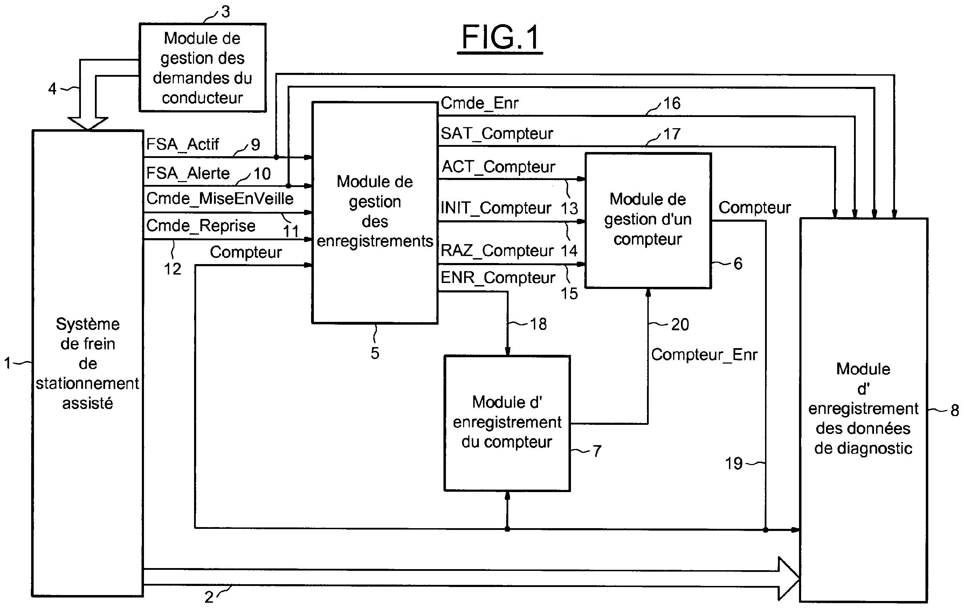

Sur la figure 1, on a représenté une vue schématique d'un dispositif d'enregistrement des données émises depuis un système de contrôle d'un véhicule automobile. Dans le mode de réalisation décrit, le système de contrôle est un système 1 de frein de stationnement assisté. Le système 1 de frein de stationnement assisté, noté également système FSA, est apte à émettre des données de diagnostic sur un réseau 2 de communication.

Ces données de diagnostic peuvent être, par exemple :
- la distance parcourue par le véhicule lors de l'enregistrement ;
- la vitesse du véhicule au moment de l'enregistrement ;
- l'état du frein de stationnement au départ et à la fin de l'opération de serrage ou de desserrage ;
- la mesure ou l'estimation de la force de serrage du frein de stationnement au départ et à la fin de l'opération ;
- l'événement qui a déclenché un enregistrement.

D'autres données de diagnostic peuvent être intéressantes à enregistrer, cependant, la seule limitation est liée à la taille de la mémoire non volatile disponible.

Le système FSA, reçoit des demandes de serrage et de desserrage du frein, transmises par une connexion 4, depuis un module 3 de gestion des demandes du conducteur.

Le dispositif d'enregistrement des données comprend un module 5 de gestion des enregistrements, un module 6 de gestion d'un compteur, un module 7 d'enregistrement du compteur et un module 8 d'enregistrement des données de diagnostic. Le principe général de l'enregistrement des données consiste à détecter un signal d'activation ou d'alerte émis depuis le système FSA, de gérer un compteur lorsqu'au moins un signal d'alerte est émis, de façon à pouvoir déterminer le temps écoulé entre la génération d'une alerte et la réponse à cette alerte, puis d'effectuer des enregistrements au départ et à la fin d'une opération du système FSA afin de diagnostiquer le fonctionnement du système FSA. En outre un enregistrement est systématiquement effectué lorsqu'un signal d'alerte est généré dans le but d'enregistrer le contexte de fonctionnement du système FSA au moment de l'alerte.

Le système 1 de frein de stationnement émet en outre des signaux *FSA_Actif, FSA_Alerte, Cmde_MiseEnVeille* et *Cmde_Reprise*, transmis respectivement par les connexions 9 à 12, en direction du module 5 de gestion des enregistrements.
- le signal *FSA_Actif* d'état d'activation est un signal booléen qui vaut :
   - 0 si le système FSA n'est pas actif, ou lorsque une opération de serrage ou de desserrage du frein de stationnement est terminée ;
   - 1 si le système FSA est actif, c'est-à-dire lorsque une opération de serrage ou de desserrage du frein de stationnement est en cours ;
- le signal *FSA_Alerte* d'alerte est un signal booléen qui vaut :
   - 0 si le système FSA ne génère pas d'alerte
   - 1 si le système FSA génère une alerte ;
- la commande *Cmde_MiseEnVeille* de mise en veille est un signal booléen qui vaut :
   - 0 si le système FSA ne commande pas de mise en veille du dispositif d'enregistrement
   - 1 si le système FSA commande une mise en veille du dispositif d'enregistrement ;
- la commande *Cmde_Reprise* de reprise est un signal booléen qui vaut :
   - 0 si le système FSA ne commande pas de reprise du dispositif d'enregistrement
   - 1 si le système FSA commande une reprise du dispositif d'enregistrement.

Le dispositif d'enregistrement des données de diagnostic gère l'enregistrement des données de diagnostic en fonction de la valeur des signaux émis par le système 1 de frein de stationnement assisté.

L'enregistrement des données de diagnostic est déclenché lors des événements d'activation suivants :
- serrage assisté du frein de stationnement activé lors d'un arrêt du moteur ;
- desserrage assisté du frein de stationnement activé lors d'un démarrage du véhicule ;
- demande du conducteur d'un serrage du frein de stationnement lorsque le véhicule est à l'arrêt ou lorsque le véhicule est en mouvement ;
- demande du conducteur d'un desserrage du frein de stationnement.

Lorsqu'un des événements d'activation précédent apparaît, le signal *FSA_Actif* d'état d'activation vaut 1 et signifie que le système 1 de frein de stationnement assisté est activé.

L'enregistrement des données de diagnostic est également déclenché lors des événements d'alerte suivants :
- alerte lorsque le frein de stationnement est non serré et que la portière du conducteur s'ouvre ;
- alerte lorsque le frein de stationnement est serré et que le véhicule est en mouvement ;
- alerte lorsque un accident est détecté, par exemple sur l'activation des airbags.

Lorsqu'un des événements d'alerte précédent apparaît, le signal *FSA_Alerte* d'alerte vaut 1 et signifie qu'une situation dangereuse a été détectée par le système 1 de frein de stationnement assisté.

L'enregistrement des données de diagnostic est également déclenché lorsque le compteur sature, c'est-à-dire qu'il atteint un seuil *CompteurMax* de compteur maximum. L'événement « compteur saturé » ne déclenche pas d'alerte, mais rend compte d'une situation dangereuse qui traduit une réaction tardive, ou absente, de la part du conducteur à un message d'alerte.

Le module 5 de gestion des enregistrements gère le signal *FSA_Actif* d'état d'activation, le signal *FSA_Alerte* d'alerte et les autres signaux *Cmde_MiseEnVeille* et *Cmde_Reprise* émis par le système 1 de frein de stationnement assisté. Lesdits signaux sont considérés comme des signaux d'entrée dudit module 5. En outre, ce module 5 de gestion des enregistrements commande la gestion d'un compteur et commande la sauvegarde dudit compteur et des données de diagnostic.

Le module 5 de gestion des enregistrements émet plusieurs signaux de sortie pour commander les autres modules 6, 7 et 8 du dispositif d'enregistrement. Les signaux de sortie *ACT_Compteur*, *INIT_Compteur* et *RAZ_Compteur*, sont transmis respectivement par les connexions 13 à 15, en direction du module 6 de gestion du compteur.
- le signal *ACT_Compteur* de commande d'activation du compteur est un signal booléen qui vaut :
   - 0 pour commander une désactivation du compteur
   - 1 pour commander une activation du compteur, c'est-à-dire pour commander une incrémentation du compteur ;
- le signal *INIT_Compteur* de commande d'initialisation du compteur est un signal booléen qui vaut :
   - 0 pour ne pas commander une initialisation du compteur
   - 1 pour commander une initialisation du compteur ;
- le signal *RAZ_Compteur* de commande de remise à zéro du compteur est un signal booléen qui vaut :
   - 0 pour ne pas commander une remise à zéro du compteur
   - 1 pour commander une remise à zéro du compteur.

Le module 5 de gestion des enregistrements émet également les signaux de sortie *Cmde_Enr*, et *SAT_Compteur*, transmis respectivement par les connexions 16 et 17, en direction du module 8 d'enregistrement des données de diagnostic.
- le signal *Cmde_Enr* de commande d'enregistrement est un signal booléen qui vaut :
   - 0 si la commande d'enregistrement est désactivée
   - 1 si la commande d'enregistrement est activée ;
- le signal *SAT_Compteur* de commande d'enregistrement du compteur saturé est un signal booléen qui vaut :
   - 0 si la commande d'enregistrement du compteur saturé est désactivée
   - 1 si la commande d'enregistrement du compteur saturé est activée.

En outre, Le module 5 de gestion des enregistrements émet un autre signal *ENR_Compteur* de sortie, transmis par une connexion 18, en direction du module 7 d'enregistrement du compteur.
- le signal de commande *ENR_Compteur* est un signal booléen qui vaut :
   - 0 s'il n'y a pas de demande d'enregistrement de la valeur du compteur dans une zone de la mémoire non volatile
   - 1 s'il y a une demande d'enregistrement de la valeur du compteur dans une zone de la mémoire non volatile.

Le module 7 d'enregistrement du compteur enregistre la valeur du compteur *Compteur* dans une zone de la mémoire non volatile dédiée au compteur.

Le module 7 d'enregistrement du compteur est également apte à émettre une valeur *Compteur_Enr* enregistrée du compteur, transmise par une connexion 20, en direction du module 6 de gestion du compteur. La valeur *Compteur_Enr* enregistrée du compteur représente la valeur du compteur *Compteur* qui est enregistrée dans la zone dédiée au compteur.

Le module 6 de gestion d'un compteur gère le compteur *Compteur* afin de fournir un moyen simple pour dater les données de diagnostic enregistrées par le module 8 d'enregistrement. L'enregistrement du compteur permet d'estimer le temps qui s'est écoulé entre la génération d'une alerte et la réaction du conducteur, ou du système de frein de stationnement, c'est-à-dire une demande de serrage ou de desserrage dudit frein de stationnement.

Le module 6 de gestion du compteur permet d'activer, d'initialiser ou de remettre à zéro le compteur en fonction des signaux de commandes émises par le module 5 de gestion des enregistrements. Par exemple, on peut gérer le compteur de la manière suivante :
- si le signal *RAZ*_*Compteur* de commande de remise à zéro du compteur vaut 1, on modifie le signal *Compteur* à la valeur nulle ;
- si le signal *ACT_Compteur* de commande d'activation du compteur vaut 1, on incrémente le signal *Compteur* ;
- si le signal *INIT_Compteur* de commande d'initialisation du compteur vaut 1, on affecte au signal *Compteur* la valeur *Compteur_Enr* enregistrée du compteur dans la zone de la mémoire non volatile dédiée au compteur.

Le module 6 de gestion du compteur émet la valeur du compteur *Compteur,* transmis par une connexion 19, en direction du module 8 d'enregistrement des données, du module 7 d'enregistrement du compteur et du module 5 de gestion des enregistrements.

Le module 8 d'enregistrement des données de diagnostic enregistre les données de diagnostic ainsi que la valeur du compteur *Compteur* dans les zones de la mémoire volatile et lorsqu'il est nécessaire de conserver ces données, ce module 8 est apte à enregistrer le contenu des zones de la mémoire volatile dans une zone de la mémoire non volatile, et est également apte à enregistrer le compteur dans une zone dédiée de la mémoire non volatile.

Le module 8 d'enregistrement des données reçoit les signaux *FSA_Actif* et *FSA_Alerte*, transmis respectivement par les connexions 9 et 10, depuis le système FSA ; les signaux *Cmde_Enr* et *SAT_Compteur*, transmis respectivement par les connexions 16 et 17, depuis le module 5 de gestion des enregistrements ; le compteur *Compteur* transmis par la connexion 19 depuis le module 6 de gestion du compteur et les données de diagnostic, transmises par le réseau de communication 2, depuis le système FSA.

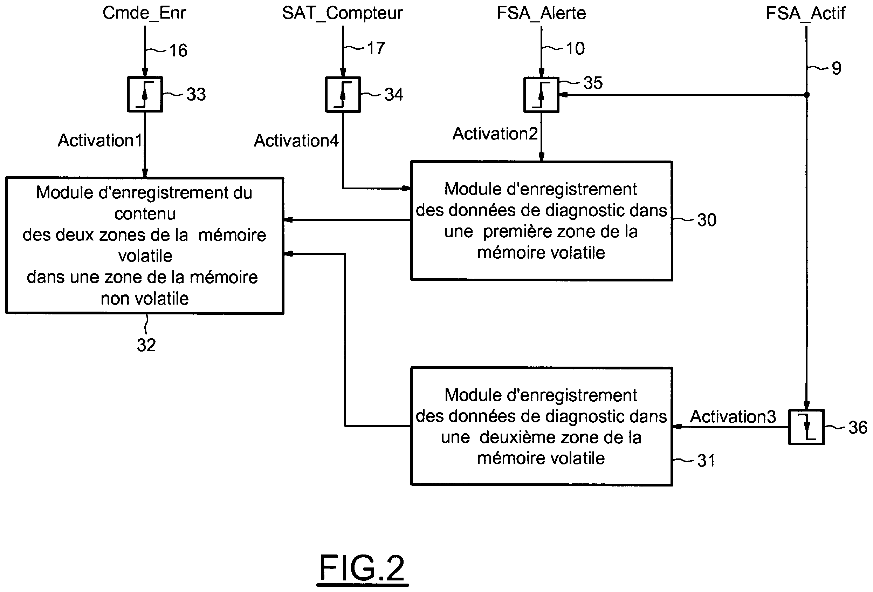

Sur la figure 2, on a représenté une vue schématique d'un mode de réalisation du module 8 d'enregistrement des données de diagnostic.

Le module 8 d'enregistrement des données de diagnostic comprend deux modules 30, 31 de gestion des enregistrements des données de diagnostic. Le module 30 gère l'enregistrement des données de diagnostic dans une première zone de la mémoire volatile. Le module 31 gère l'enregistrement des données de diagnostic dans une deuxième zone de la mémoire volatile. Ledit module 8 d'enregistrement comprend également un module 32 d'enregistrement du contenu des deux zones de la mémoire volatile dans une zone de la mémoire non volatile. En outre, ledit module 8 d'enregistrement comprend un moyen 33 pour détecter un front montant du signal *Cmde_Enr* de commande d'enregistrement, un moyen 34 pour détecter un front montant du signal *SAT*_*Compteur* de commande d'enregistrement du compteur saturé et un moyen 35 pour détecter un front montant du signal *FSA_Alerte* d'alerte et un front montant du signal *FSA_Actif* d'état d'activation. Le module 8 d'enregistrement des données de diagnostic comprend également un moyen 36 pour détecter un front descendant du signal *FSA_Actif* d'état d'activation.

Lorsque le moyen 35 détecte un front montant du signal *FSA_Actif* d'état d'activation ou un front montant du signal *FSA_Alerte* d'alerte, il active un signal *Activation2* pour commander au module 30 d'enregistrement un enregistrement des données de diagnostic et du compteur dans la première zone de la mémoire volatile.

Lorsque le moyen 34 détecte un front montant du signal *SAT*_*Compteur* de commande d'enregistrement du compteur saturé, il active un signal *Activation4* pour commander au module 30 d'enregistrement un enregistrement des données de diagnostic et du compteur dans la première zone de la mémoire volatile.

Lorsque le moyen 36 détecte un front descendant du signal *FSA_Actif* d'état d'activation, il active un signal *Activation3* pour commander au module 31 d'enregistrement un enregistrement des données de diagnostic et du compteur dans la deuxième zone de la mémoire volatile.

Lorsque le moyen 33 détecte un front montant du signal *Cmde_Enr* de commande d'enregistrement, il active un signal *Activation1* pour commander au module 32 d'enregistrement un enregistrement du contenu des deux zones de la mémoire volatile dans une zone de la mémoire non volatile.

Le dispositif d'enregistrement des données peut être implémenté dans une unité de commande électronique sous la forme d'un dispositif électronique, ou sous une forme logicielle, il peut également être embarqué sous une forme logicielle dans un automate programmable.

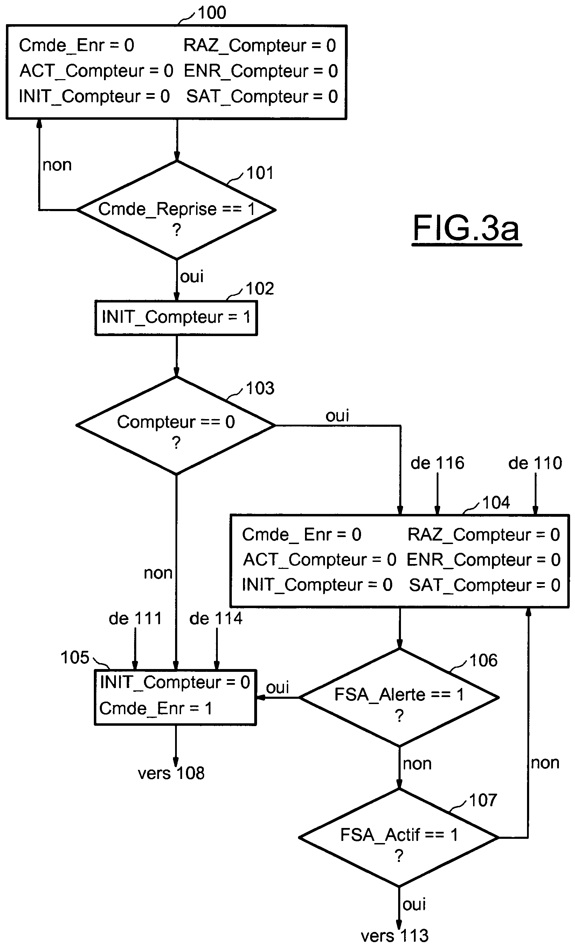

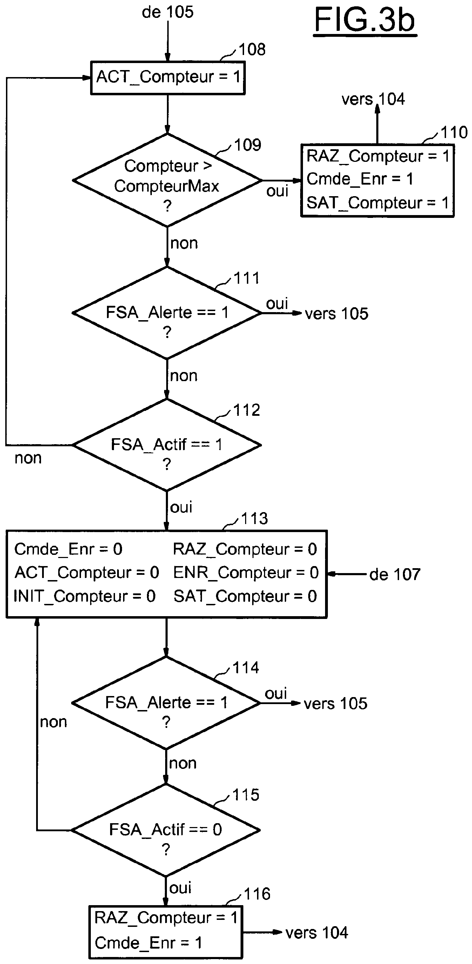

Sur les figures 3a et 3b on a représenté un organigramme illustrant les principales phases d'un procédé d'enregistrement des données émises depuis un système de contrôle d'un véhicule automobile.

Le principe général du procédé d'enregistrement des données consiste à détecter des variations des signaux d'état d'activation et d'alerte émis par le système FSA, et suivant la transition en front montant et en front descendant desdits signaux, on procède à des enregistrements des données de diagnostic et d'un compteur.

Lorsque le système FSA effectue une opération de serrage ou de desserrage, on enregistre les données de diagnostic et le compteur dans une première zone d'une mémoire volatile puis on attend la fin de l'opération. Ce premier enregistrement permet de sauvegarder les données au départ de l'opération.

Lorsque l'opération est terminée, on enregistre les données de diagnostic et le compteur dans une deuxième zone de la mémoire volatile, puis on enregistre le contenu des deux zones de la mémoire volatile dans une zone d'une mémoire non volatile. Ce deuxième enregistrement permet de sauvegarder les données à la fin de l'opération.

Grâce à une comparaison des données enregistrées au départ et à la fin de l'opération on pourra diagnostiquer le fonctionnement du système FSA en l'absence de signaux d'alerte.

Lorsque le système FSA génère un signal d'alerte, on enregistre les données de diagnostic et le compteur dans la première zone de la mémoire volatile puis on enregistre le contenu des deux zones de la mémoire volatile dans une zone de la mémoire non volatile. L'enregistrement des données dans la mémoire non volatile permet de conserver le contexte qui a déclenché un signal d'alerte. Par ailleurs, on déclenche l'incrémentation d'un compteur et on attend que le système FSA effectue une opération de serrage ou de desserrage, soit sur demande du conducteur en réponse au signal d'alerte, soit automatiquement si le système FSA peut corriger automatiquement le défaut en cours.

Lorsque le système FSA effectue l'opération de serrage ou de desserrage en réponse au signal d'alerte, on arrête l'incrémentation du compteur et on enregistre les données.

Le procédé commence par une étape 100 d'initialisation. Dans cette étape d'initialisation, on initialise à la valeur nulle les signaux de sortie du module 5 de gestion des enregistrements décrit à la figure 1 précédente.

Après cette étape 100 d'initialisation, on effectue une étape 101 de comparaison dans laquelle on test la valeur de la commande de reprise *Cmde_Reprise.* Si le système FSA commande une reprise du dispositif d'enregistrement (*Cmde_Reprise* vaut 1), on effectue une étape 102 de restauration du compteur, dans le cas contraire on effectue à nouveau l'étape 100 d'initialisation.

A l'étape 102 de restauration du compteur, on modifie le signal *INIT_Compteur* de commande d'initialisation du compteur à la valeur 1 (*INIT_Compteur* vaut 1), afin de restaurer la valeur du compteur en affectant à la valeur *Compteur* courante du compteur la valeur *Compteur_Enr* enregistrée dans une zone, de la mémoire non volatile, dédiée au compteur.

Après cette étape 102 de restauration, on effectue une étape 103 de comparaison dans laquelle on test la valeur du compteur *Compteur.* Si la valeur du compteur ainsi restaurée est nulle (*Compteur* vaut 0), on effectue une étape 104 d'attente d'un événement déclenchant un enregistrement, dans le cas contraire on effectue une étape 105 d'enregistrement du contexte d'alerte.

A l'étape 104 d'attente d'un événement déclenchant un enregistrement, on réinitialise à la valeur nulle les signaux de sortie du module 5 de gestion des enregistrements.

Après cette étape 104 d'attente d'un événement déclenchant un enregistrement, on effectue une étape 106 de comparaison dans laquelle on test la valeur du signal *FSA_Alerte* d'alerte. Si le système FSA génère une alerte (*FSA_Alerte* vaut 1), on effectue l'étape 105 d'enregistrement du contexte d'alerte, dans le cas contraire on effectue une autre étape 107 de comparaison.

A l'étape 107 de comparaison, on test la valeur du signal *FSA_Actif* d'état d'activation. Si le système FSA est actif (*FSA_Actif* vaut 1), on effectue l'étape 113 d'attente de la fin d'opération du système FSA, dans le cas contraire on effectue à nouveau l'étape 104 d'attente d'un événement déclenchant un enregistrement.

A l'étape 105 d'enregistrement du contexte d'alerte, on modifie le signal *INIT_Compteur* de commande d'initialisation du compteur à la valeur 0 (*INIT_Compteur* vaut 0) et l'on modifie le signal *Cmde_Enr* de commande d'enregistrement à la valeur 1 (*Cmde_Enr* vaut 1). L'activation de la commande *Cmde_Enr* d'enregistrement va déclencher l'enregistrement du contenu des deux zones de la mémoire volatile dans une zone de la mémoire non volatile.

Après l'étape 105 d'enregistrement du contexte d'alerte, on effectue une étape 108 d'activation du compteur dans laquelle on modifie le signal *ACT_Compteur* d'activation du compteur à la valeur 1 (*ACT_Compteur* vaut 1), ce qui déclenche l'incrémentation du compteur *Compteur.*

Après cette étape 108 d'activation du compteur, on effectue une étape 109 de comparaison dans laquelle on test la valeur du compteur *Compteur.* Si la valeur du compteur courante est strictement supérieure au seuil *CompteurMax*, qui est la limite de saturation du compteur, (*Compteur* > *CompteurMax*), on effectue une étape 110 de désaturation du compteur, dans le cas contraire on effectue une autre étape 111 de comparaison.

A l'étape 110 de désaturation du compteur, on modifie le signal *SAT_Compteur* à la valeur 1, puis les signaux *RAZ_Compteur*, *Cmde_Enr* à la valeur 1. L'activation du signal *SAT_Compteur* de commande d'enregistrement du compteur saturé entraîne une sauvegarde des données de diagnostic et du compteur dans la première zone de la mémoire volatile. L'activation du signal *RAZ_Compteur* de commande de mise à zéro du compteur a pour effet de désaturer le compteur *Compteur* en le réinitialisant à la valeur 0, et l'activation de la commande d'enregistrement *Cmde_Enr* entraîne une sauvegarde du contenu de ladite mémoire non volatile dans une zone de la mémoire non volatile.

Après cette étape 110 de désaturation du compteur on effectue à nouveau l'étape 104 d'attente d'un événement déclenchant un enregistrement.

A l'étape 111 de comparaison, on test la valeur du signal *FSA_Alerte* d'alerte. Si le système FSA génère une alerte (*FSA_Alerte* vaut 1), on effectue l'étape 105 d'enregistrement du contexte d'alerte, dans le cas contraire on effectue une autre étape 112 de comparaison.

A l'étape 112 de comparaison, on test la valeur du signal *FSA_Actif* d'état d'activation. Si le système FSA est actif (*FSA_Actif* vaut 1), on effectue l'étape 113 d'attente de la fin d'opération du système FSA, dans le cas contraire on effectue à nouveau l'étape 108 d'activation du compteur.

A l'étape 113 d'attente de la fin d'opération du système FSA, on initialise à la valeur nulle les signaux de sortie du module 5 de gestion des enregistrements. Lorsqu'on désactive le compteur (*ACT_Compteur* vaut 0), on arrête l'incrémentation du compteur *Compteur.*

Après cette étape 113 d'attente de la fin d'opération du système FSA, on effectue une étape 114 de comparaison dans laquelle on test la valeur du signal *FSA_Alerte* d'alerte. Si le système FSA génère une alerte (*FSA_Alerte* vaut 1), on effectue l'étape 105 d'enregistrement du contexte d'alerte, dans le cas contraire on effectue une autre étape 115 de comparaison.

A l'étape 115 de comparaison, on test la valeur du signal *FSA_Actif* d'état d'activation. Si le système FSA n'est pas actif (*FSA_Actif* vaut 0), c'est-à-dire si l'opération de serrage ou de desserrage du frein de stationnement est terminée, on effectue une étape 116 d'enregistrement des contextes de fonctionnement du système FSA, dans le cas contraire on effectue à nouveau l'étape 113 d'attente de la fin d'opération du système FSA.

A l'étape 116 d'enregistrement des contextes de fonctionnement du système FSA, on modifie le signal *RAZ_Compteur* de commande de remise à zéro du compteur à la valeur 1 (*RAZ_Compteur* vaut 1) et l'on modifie le signal *Cmde_Enr* de commande d'enregistrement à la valeur 1 (*Cmde_Enr* vaut 1).

Après l'étape 116 d'enregistrement des contextes de fonctionnement du système FSA on effectue à nouveau l'étape 104 d'attente d'un événement déclenchant un enregistrement.

On notera qu'à tout moment, pendant l'exécution du procédé d'enregistrement, on peut tester la valeur de la commande *Cmde*_*MiseEnVeille* de mise en veille. Si le système FSA commande une mise en veille du dispositif d'enregistrement (*Cmde_MiseEnVeille* vaut 1), on modifie le signal *ENR_Compteur* à la valeur 1 pour conserver la valeur courante du compteur dans la zone de la mémoire non volatile dédiée au compteur et l'on effectue l'étape 100 d'initialisation.

On notera que le signal *FSA_Actif* est un signal maintenu, c'est-à-dire que tant que le système 1 de frein de stationnement assisté est activé, le signal *FSA_Actif* vaut 1.

On notera que le signal *FSA_Alerte* est un signal non maintenu, c'est-à-dire que lorsqu'un événement d'alerte est détecté par le système 1 de frein de stationnement assisté, le *FSA_Alerte* vaut 1 pour signaler l'alerte, puis reprend la valeur 0 instantanément.

Les étapes du procédé d'enregistrement peuvent être mises en oeuvre par un circuit électronique, ou sous la forme logicielle, ou dans un automate programmable, implémenté dans le module 5 de gestion des enregistrements.

Grâce à l'enregistrement de l'état du frein de stationnement au départ et à la fin de l'opération de serrage ou de desserrage, on peut vérifier si l'opération a été correctement exécutée par le système.

## Revendications

1. Dispositif d'enregistrement des données émises depuis un système (1) de contrôle d'un véhicule automobile, comprenant une mémoire volatile, une mémoire non volatile et un module (8) d'enregistrement des données, apte à recevoir un signal d'état d'activation émis par le système (1) de contrôle et qui est apte à enregistrer les données dans une première zone de la mémoire volatile sur un front montant du signal d'état d'activation et dans une deuxième zone de la mémoire volatile sur un front descendant du signal d'état d'activation, **caractérisé en ce qu'**il comprend un module (5) de gestion des enregistrements apte à recevoir le signal d'état d'activation et qui est apte à activer une commande d'enregistrement sur un front descendant du signal d'état d'activation, le module (8) d'enregistrement étant, en outre, apte à recevoir la commande d'enregistrement et apte à enregistrer le contenu des deux zones de la mémoire volatile dans une zone de la mémoire non volatile lorsque la commande d'enregistrement est activée.

2. Dispositif d'enregistrement selon la revendication 1, dans lequel le module (8) d'enregistrement des données et le module (5) de gestion des enregistrements sont aptes à recevoir un signal d'alerte émis par le système de contrôle, le module (8) d'enregistrement des données étant apte à enregistrer les données dans la première zone de la mémoire volatile sur un front montant du signal d'alerte, et le module (5) de gestion des enregistrements étant apte à activer la commande d'enregistrement sur un front montant du signal d'alerte.

3. Dispositif d'enregistrement selon la revendication 2, comprenant un module (6) de gestion d'un compteur apte à incrémenter un compteur sur un front montant du signal d'alerte et qui est apte à transmettre la valeur courante du compteur au module (8) d'enregistrement des données, le module (8) d'enregistrement étant apte à enregistrer la valeur courante du compteur dans une zone de la mémoire volatile.

4. Dispositif d'enregistrement selon la revendication 3, comprenant un module (7) d'enregistrement du compteur apte à enregistrer la valeur courante du compteur dans une zone de la mémoire non volatile sur un front montant d'une commande de mise en veille émise par le système (1) de contrôle, et qui est apte à transmettre la valeur enregistrée du compteur au module (6) de gestion du compteur sur un front montant d'une commande de reprise par le système (1) de contrôle.

5. Dispositif d'enregistrement selon l'une quelconque des revendications 3 et 4, dans lequel le module (5) de gestion des enregistrements est apte comparer la valeur courante du compteur avec un seuil de compteur maximum, et qui est apte à activer la commande d'enregistrement et à activer une commande d'enregistrement du compteur saturé si le compteur est strictement supérieur au seuil de compteur maximum, le module (8) d'enregistrement des données étant apte à recevoir la commande d'enregistrement du compteur saturé et qui est apte à enregistrer la valeur courante du compteur et les données dans la première zone de la mémoire volatile lorsque la commande d'enregistrement du compteur saturé est activée.

6. Procédé d'enregistrement des données émises depuis un système de contrôle d'un véhicule automobile, comprenant une mémoire volatile et une mémoire non volatile, le système de contrôle générant au moins un signal d'état d'activation, et dans lequel on enregistre les données dans une première zone de la mémoire volatile lorsque le signal d'état d'activation est activé et dans une deuxième zone de la mémoire volatile lorsque le signal d'état d'activation est désactivé, **caractérisé en ce qu'**on enregistre le contenu des deux zones de la mémoire volatile dans une zone de la mémoire non volatile lorsque le signal d'état d'activation est désactivé.

7. Procédé d'enregistrement selon la revendication 6, dans lequel le système de contrôle génère au moins un signal d'alerte, et dans lequel on enregistre les données dans la première zone de la mémoire volatile lorsque le signal d'alerte est activé, puis on enregistre le contenu des deux zones de la mémoire volatile dans une zone de la mémoire non volatile.

8. Procédé d'enregistrement selon la revendication 7, dans lequel, on incrémente un compteur lorsque le signal d'alerte est activé, et l'on enregistre les données et le compteur dans la première zone de la mémoire volatile lorsque le signal d'état d'activation est activé.

9. Procédé d'enregistrement selon la revendication 8, dans lequel le système de contrôle génère une commande de mise en veille et une commande de reprise, et dans lequel on enregistre la valeur courante du compteur dans une zone de la mémoire non volatile lorsque la commande de mise en veille est activée, et l'on initialise le compteur par la valeur courante enregistrée du compteur lorsque la commande de reprise est activée.

10. Procédé d'enregistrement selon l'une des revendications 8 et 9, dans lequel on compare la valeur courante du compteur avec un seuil de compteur maximum, et lorsque le compteur est strictement supérieur au seuil de compteur maximum, on enregistre les données et le compteur dans la première zone de la mémoire volatile, puis on enregistre le contenu des deux zones de la mémoire volatile dans une zone de la mémoire non volatile.

## Patentansprüche

1. Aufzeichnungsgerät für Daten, die von einem Steuerungssystem (1) eines Kraftfahrzeugs gesendet werden, umfassend einen flüchtigen Speicher, einen nichtflüchtigen Speicher und ein Modul (8) zur Aufzeichnung der Daten, das geeignet ist, ein vom Steuerungssystem (1) gesendetes Aktivierungszustandssignal zu empfangen, und das geeignet ist, die Daten bei einer steigenden Flanke des Aktivierungszustandssignals in einem ersten Bereich des flüchtigen Speichers und bei einer fallenden Flanke des Aktivierungszustandssignals in einem zweiten Bereich des flüchtigen Speichers aufzuzeichnen, **dadurch gekennzeichnet, dass** es ein Modul (5) zur Verwaltung der Aufzeichnungen umfasst, das geeignet ist, das Aktivierungszustandssignal zu empfangen, und das geeignet ist, bei einer fallenden Flanke des Aktivierungszustandssignals einen Aufzeichnungsbefehl zu aktivieren, wobei das Modul (8) zur Aufzeichnung ferner geeignet ist, den Aufzeichnungsbefehl zu empfangen, und geeignet ist, den Inhalt der beiden Bereiche des flüchtigen Speichers in einem Bereich des nichtflüchtigen Speichers aufzuzeichnen, wenn der Aufzeichnungsbefehl aktiviert ist.

2. Aufzeichnungsgerät nach Anspruch 1, wobei das Modul (8) zur Aufzeichnung der Daten und das Modul (5) zur Verwaltung der Aufzeichnungen geeignet sind, ein vom Steuerungssystem gesendetes Alarmsignal zu empfangen, wobei das Modul (8) zur Aufzeichnung der Daten geeignet ist, die Daten bei einer steigenden Flanke des Alarmsignals im ersten Bereich des flüchtigen Speichers aufzuzeichnen, und das Modul (5) zur Verwaltung der Aufzeichnungen geeignet ist, den Aufzeichnungsbefehl bei einer steigenden Flanke des Alarmsignals zu aktivieren.

3. Aufzeichnungsgerät nach Anspruch 2, umfassend ein Modul (6) zur Verwaltung eines Zählers, das geeignet ist, einen Zähler bei einer steigenden Flanke des Alarmsignals zu inkrementieren, und das geeignet ist, den aktuellen Wert des Zählers an das Modul (8) zur Aufzeichnung der Daten zu übertragen, wobei das Aufzeichnungsmodul (8) geeignet ist, den aktuellen Wert des Zählers in einem Bereich des flüchtigen Speichers aufzuzeichnen.

4. Aufzeichnungsgerät nach Anspruch 3, umfassend ein Modul (7) zur Aufzeichnung des Zählers, das geeignet ist, den aktuellen Wert des Zählers bei einer steigenden Flanke eines Standby-Befehls, der vom Steuerungssystem (1) gesendet wird, in einem Bereich des nichtflüchtigen Speichers aufzuzeichnen, und das geeignet ist, den aufgezeichneten Wert des Zählers bei einer steigenden Flanke eines Wiederaufnahmebefehls durch das Steuerungssystem (1) an das Modul (6) zur Verwaltung des Zählers zu übertragen.

5. Aufzeichnungsgerät nach einem der Ansprüche 3 und 4, wobei das Modul (5) zur Verwaltung der Aufzeichnungen geeignet ist, den aktuellen Wert des Zählers mit einem maximalen Zählerschwellenwert zu vergleichen, und geeignet ist, den Aufzeichnungsbefehl zu aktivieren und einen Aufzeichnungsbefehl des gesättigten Zählers zu aktivieren, wenn der Zähler größer als der maximale Zählerschwellenwert ist, wobei das Modul (8) zur Aufzeichnung der Daten geeignet ist, den Aufzeichnungsbefehl des gesättigten Zählers zu empfangen, und geeignet ist, den aktuellen Wert des Zählers und die Daten in dem ersten Bereich des flüchtigen Speichers aufzuzeichnen, wenn der Aufzeichnungsbefehl des gesättigten Zählers aktiviert ist.

6. Aufzeichnungsverfahren für Daten, die von einem Steuerungssystem eines Kraftfahrzeugs gesendet werden, umfassend einen flüchtigen Speicher und einen nichtflüchtigen Speicher, wobei das Steuerungssystem mindestens ein Aktivierungszustandssignal erzeugt und wobei die Daten in einem ersten Bereich des flüchtigen Speichers aufgezeichnet werden, wenn das Aktivierungszustandssignal aktiviert ist, und in einem zweiten Bereich des flüchtigen Speichers, wenn das Aktivierungszustandssignal deaktiviert ist, **dadurch gekennzeichnet, dass** der Inhalt der beiden Bereiche des flüchtigen Speichers in einem Bereich des nichtflüchtigen Speichers aufgezeichnet wird, wenn das Aktivierungszustandssignal deaktiviert ist.

7. Aufzeichnungsverfahren nach Anspruch 6, wobei das Steuerungssystem mindestens ein Alarmsignal erzeugt und wobei die Daten in dem ersten Bereich des flüchtigen Speichers aufgezeichnet werden, wenn das Alarmsignal aktiviert ist, und dann der Inhalt der beiden Bereiche des flüchtigen Speichers in einem Bereich des nichtflüchtigen Speichers aufgezeichnet wird.

8. Aufzeichnungsverfahren nach Anspruch 7, wobei ein Zähler inkrementiert wird, wenn das Alarmsignal aktiviert ist, und die Daten und der Zähler in dem ersten Bereich des flüchtigen Speichers aufgezeichnet werden, wenn das Aktivierungszustandssignal aktiviert ist.

9. Aufzeichnungsverfahren nach Anspruch 8, wobei das Steuerungssystem einen Standby-Befehl und einen Wiederaufnahmebefehl erzeugt und wobei der aktuelle Wert des Zählers in einem Bereich des nichtflüchtigen Speichers aufgezeichnet wird, wenn der Standby-Befehl aktiviert ist, und der Zähler durch den aufgezeichneten aktuellen Wert des Zählers initialisiert wird, wenn der Wiederaufnahmebefehl aktiviert ist.

10. Aufzeichnungsverfahren nach einem der Ansprüche 8 und 9, wobei der aktuelle Wert des Zählers mit einem maximalen Zählerschwellenwert verglichen wird und, wenn der Zähler größer als der maximale Zählerschwellenwert ist, die Daten und der Zähler in dem ersten Bereich des flüchtigen Zählers aufgezeichnet werden und dann der Inhalt der beiden Bereiche des flüchtigen Speichers in einem Bereich des nichtflüchtigen Speichers aufgezeichnet wird.

## Claims

1. Device for recording the data emitted from a motor vehicle control system (1), comprising a volatile memory, a nonvolatile memory and a data recording module (8), able to receive an activation state signal emitted by the control system (1) and which is able to record the data in a first area of the volatile memory on a rising edge of the activation state signal and in a second area of the volatile memory on a falling edge of the activation state signal, **characterized in that** it comprises a module (5) for managing the recordings which is able to receive the activation state signal and which is able to activate a recording command on a falling edge of the activation state signal, the recording module (8) being, furthermore, able to receive the recording command and able to record the content of the two areas of the volatile memory in an area of the nonvolatile memory when the recording command is activated.

2. Recording device according to Claim 1, in which the module (8) for recording the data and the module (5) for managing the recordings are able to receive an alert signal emitted by the control system, the module (8) for recording the data being able to record the data in the first area of the volatile memory on a rising edge of the alert signal, and the module (5) for managing the recordings being able to activate the recording command on a rising edge of the alert signal.

3. Recording device according to Claim 2, comprising a module (6) for managing a counter able to increment a counter on a rising edge of the alert signal and which is able to transmit the current value of the counter to the module (8) for recording the data, the recording module (8) being able to record the current value of the counter in an area of the volatile memory.

4. Recording device according to Claim 3, comprising a module (7) for recording the counter able to record the current value of the counter in an area of the nonvolatile memory on a rising edge of a place on standby command emitted by the control system (1), and which is able to transmit the recorded value of the counter to the module (6) for managing the counter on a rising edge of a command to resume by the control system (1).

5. Recording device according to either one of Claims 3 and 4, in which the module (5) for managing the recordings is able to compare the current value of the counter with a maximum counter threshold, and which is able to activate the recording command and to activate a command for recording the saturated counter if the counter is strictly greater than the maximum counter threshold, the module (8) for recording the data being able to receive the command for recording the saturated counter and which is able to record the current value of the counter and the data in the first area of the volatile memory when the command for recording the saturated counter is activated.

6. Method for recording the data emitted from a motor vehicle control system, comprising a volatile memory and a nonvolatile memory, the control system generating at least one activation state signal, and in which the data are recorded in a first area of the volatile memory when the activation state signal is activated and in a second area of the volatile memory when the activation state signal is deactivated, **characterized in that** the content of the two areas of the volatile memory is recorded in an area of the nonvolatile memory when the activation state signal is deactivated.

7. Recording method according to Claim 6, in which the control system generates at least one alert signal, and in which the data are recorded in the first area of the volatile memory when the alert signal is activated, and then the content of the two areas of the volatile memory is recorded in an area of the nonvolatile memory.

8. Recording method according to Claim 7, in which a counter is incremented when the alert signal is activated, and the data and the counter are recorded in the first area of the volatile memory when the activation state signal is activated.

9. Recording method according to Claim 8, in which the control system generates a standby command and a resumption command, and in which the current value of the counter is recorded in an area of the nonvolatile memory when the standby command is activated, and the counter is initialized by the recorded current value of the counter when the resumption command is activated.

10. Recording method according to either of Claims 8 and 9, in which the current value of the counter is compared with a maximum counter threshold, and when the counter is strictly greater than the maximum counter threshold, the data and the counter are recorded in the first area of the volatile memory, and then the content of the two areas of the volatile memory is recorded in an area of the nonvolatile memory.
